# EUROPEAN PATENT SPECIFICATION

(11) **EP 3 915 451 B1**
(45) Date of publication and mention of the grant of the patent: **01.03.2023**
(21) Application number: 21176382.6
(22) Date of filing: 27.05.2021
(51) Int. Cl.: A47J 42/40

(54) **COFFEE GRINDING ASSEMBLY WITH INTERCHANGEABLE LOADING DEVICES**
KAFFEEMAHLANORDNUNG MIT EINWECHSELBAREN LADEVORRICHTUNGEN
ENSEMBLE DE BROYAGE POUR CAFÉ AVEC DISPOSITIFS DE CHARGEMENT INTERCHANGEABLES

(30) Priority: 28.05.2020 IT 202000012664
(43) Date of publication of application: 01.12.2021
(73) Proprietor: Gruppo Cimbali S.p.A., 20082 Binasco (MI) (IT)
(72) Inventor: Abbiati, Giacomo, 20082 Binasco MI (IT)
(74) Representative: Perani & Partners S.p.A.

(56) References cited:
- EP-A1- 1 776 907
- EP-A1- 3 329 811
- WO-A1-2015/000834
- WO-A1-2020/003227
- FR-A5- 2 198 389
- GB-A- 865 303

## Description

### Field of the invention

The present invention finds application in the field of coffee grinders, which are intended to dispense ground coffee that can be collected using various types of containers for alternative modes of preparation of a coffee-based beverage. Various aspects of the invention specifically relate to a coffee grinding device, one or more loading devices designed to be fixed to the coffee grinding device to adapt it to dispense ground coffee into different types of container, a coffee grinding assembly, which comprises a coffee grinding device and a loading device fixed together, and a coffee grinding kit comprising a coffee grinding device and multiple interchangeable loading devices.

### Background art

Various types of manual or automatic coffee grinders are known in the art, which grind coffee beans to obtain the ground coffee required for preparation of various coffee-based beverages. The beverages may be prepared in many different ways, based on respective different machines. Depending on the machine that is used to prepare the beverage, or anyway on the intended destination of the ground coffee, the most appropriate container for collecting the ground coffee from the coffee grinding device also changes.

Nevertheless, most of prior art coffee grinders are adapted to interface with a single type of container to collect coffee, or with a limited number of different containers. Therefore, each different use of ground coffee also requires a different coffee grinder.

A first distinctive feature of coffee grinders is their dispensing operation, which may be traditional or on demand. In on-demand machines coffee beans are ground in a timed or controlled manner, for the device to produce each time a single predetermined dose of ground coffee, expressed for example in terms of weight. Two examples of on-demand coffee grinders are disclosed in EP 3329811 and WO 2017149183. A further coffee grinder is described in EP 1776907.

On the other hand, in traditional machines, grinding involves a significant amount of coffee, greater than a single dose, which is collected in a storage container. The container is equipped with a trap that can be opened by means of a lever. Each time it is opened, a given amount of coffee is dispensed to the outside by gravity, until the desired dose is attained.

Then, the ground coffee may be used for instantaneous preparation of a beverage, such as espresso coffee, by the passage of a pressurized fluid, for example hot water, in which case the most common carrying container is a portafilter. Therefore, the coffee grinders of the prior art may have a pair of grooved arms arranged as a fork to retain a portafilter therebetween.

Alternatively, the ground coffee may be sold to a customer for later use. In this case the collecting container may be a bag or ajar.

Finally, the ground coffee may be instantaneously used to prepare a beverage known as drip coffee. Here, the brewing fluid is not pressurized, but simply poured onto the ground coffee, which is held and retained by a filter, while the liquid slowly flowing by gravity through the filter and the ground coffee. One example of a container suitable for the preparation of drip coffee is known as dripper and has the shape of a conical cup with the filter placed on its open bottom.

Thus, the ground coffee is deposited on the filter and the brewing fluid is poured onto the ground coffee, passes through the filter and percolates into an additional underlying cup which is used to serve the beverage.

### Summary of the invention

The object of the present invention is to solve the above discussed drawbacks of the prior art, and in particular to afford dispensing of ground coffee for many of the above described uses with a single machine, at most by simple removal and replacement of certain parts.

This and other objects are fulfilled by a coffee grinding assembly as defined in any of the accompanying claims. Similarly, such objects are fulfilled by individual parts of the coffee grinding assembly, such as a coffee grinding device or a loading device, as well as by kits in which a coffee grinding device and various interchangeable loading devices are provided.

A first aspect of the invention particularly relates to the system for removably fixing a loading device to a coffee grinding device. Thanks to this removable fixation, different loading devices may be fixed to the same coffee grinding device, as long as they have the same fixation system. Each of the loading devices forms an interface for the coffee grinding device with one or more different ground coffee-carrying containers. Due to the selection of the most appropriate loading device the coffee grinding assembly is particularly flexible, according to the intended purposes. In addition, washing of the individual parts is simpler.

The fixation system comprises one or more fixing apertures, formed in a fixing wall of the frame of the coffee grinding device, and one or more fixing pins of the loading device, which fit into the fixing apertures. One or more of the coffee grinding device locking elements are movable along the fixing wall to engage and disengage locking seats formed in the fixing pins, thereby retaining and releasing the fixing pins.

In the preferred embodiment, the locking elements are two plates having a pair of slots each. The plates slide on a guide inside the frame, parallel to the fixing wall. Four fixing pins fit each into a respective fixing aperture and into a respective slot. The two plates are elastically pressed together for the edges of the slots to penetrate grooves of the pins and stop their travel.

The loading device may be unlocked, for example, by control members emerging from control openings of the fixing wall. These members may be pushed, against the action of elastic members, to slide the plates so that the edges of the slots will be released from the grooves of the pins.

Further aspects of the invention relate to different possible configurations of the loading devices for optimal adaptation to the different containers that may be used to collect the ground coffee.

In the preferred embodiments two alternative interchangeable loading devices are provided, i.e. one on-demand and one of traditional type, which are sufficient to adapt the coffee grinding device to dispense ground coffee to portafilters, drippers, bags and jars of different sizes, which adds versatility to the coffee grinding assembly as required by the intended purposes.

A pair of fork arms may be part of the coffee grinding device and have different functions according to the container and the loading device in use, such as supporting a portafilter, holding a container such as ajar, or provide support for additional fork or plate mounts of one of the loading device implementations.

Further characteristics and advantages of the invention will be recognizable by a skilled person from the following detailed description of exemplary embodiments of the invention.

### Brief description of figures

To facilitate understanding of the following detailed description, certain embodiments of the invention are shown in the accompanying drawings, in which:

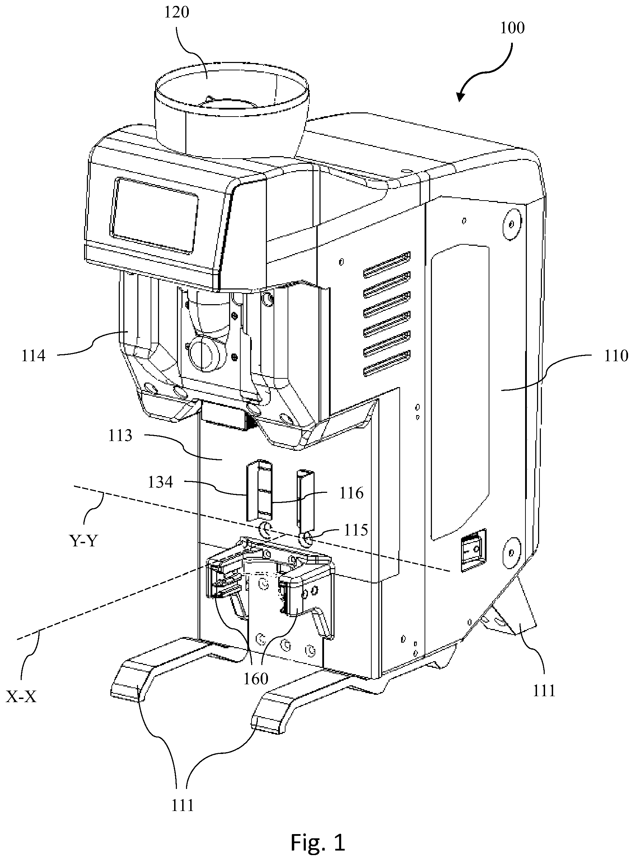

- Figure 1 shows a coffee grinding device according to one embodiment of the invention,

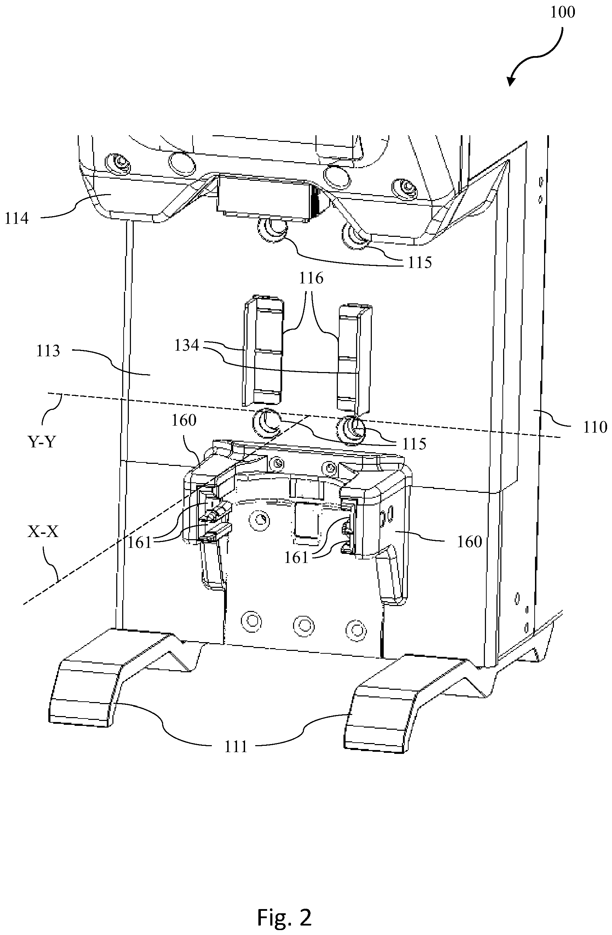

- Figure 2 is an enlarged view of a portion of the coffee grinding device of Figure 1,
- Figure 3 shows a part of the coffee grinding device of Figure 1, from the side that, in use, is inside the coffee grinding device,
- Figures 4 to 6 schematically show three aligned or offset conditions between certain slots and openings of the coffee grinding device of Figure 1,
- Figures 7 and 8 are two rear and front perspective views of a loading device that can be fixed to the coffee grinding device of Figure 1, for interfacing with certain types of ground coffee containers,
- Figure 9 illustrates a coffee grinding assembly composed of the coffee grinding device of Figure 1 and the loading device of Figures 7 and 8, in use in combination with a ground coffee container,
- Figure 10 shows a known example of a portafilter that can be used with the coffee grinding assembly of Figure 9, instead of the ground coffee container shown therein,
- Figure 11 shows an alternative loading device interchangeable with that of Figures 7 and 8,
- Figure 12 shows a sectional view of the loading device of Figure 11,
- Figure 13 shows a coffee grinding assembly composed of the coffee grinding device of Figure 1 and the loading device of Figure 11,
- Figure 14 shows a support fork for a dripper,
- Figure 15 shows the coffee grinding assembly of Figure 13 with the fork of Figure 14 mounted thereto,
- Figure 16 shows the coffee grinding assembly of Figure 15 in use with a dripper resting on the fork,
- Figure 17 shows the coffee grinding assembly of Figure 13 with plate mounted thereto, as an alternative to the fork of Figure 14,
- Figures 18 and 19 show the coffee grinding assembly of Figure 13 in use with two different ground coffee containers.

### DETAILED DESCRIPTION

The Figures show a coffee grinding device 100 and certain loading devices 200 that can be removably interchangeably fixed to the coffee grinding device 100. The assembly of a coffee grinding device 100 and any of the loading devices 200 will be hereinafter referred to as a coffee grinding assembly.

The coffee grinding device 100 comprises a frame 110 that contains most of the parts, also of the prior art, which allow operation of the coffee grinding device 100. The frame 110 has a base (not shown), optionally having feet or other supporting elements 111, which is placed at the bottom to keep the coffee grinding device 100 in an upright position when it stands on a level surface. The terms lower/upper/above/below or similar terms will be used hereinbelow with reference to the upright position.

The grinder device 100 comprises grinding members configured to grind coffee beans. The grinding members are inside the frame 110 and are not shown in the Figures. These members are generally known and may comprise, for example, a grinder unit and a motor for driving the grinder unit. The coffee grinding device 100 may further comprise buttons, displays and/or panels for controlling the operation of the grinding members, as well as a processing unit configured to operate such commands by controlling the driving motor.

Preferably, the grinding members are configured, by being controlled, to stop after having ground a predetermined dose of coffee beans. This can be achieved using prior art techniques by pre-setting a grinding time, or more precisely by feedback controls that measure, by means of suitable sensors, the weight of the coffee beans or of the coffee that has already been ground. Here, the coffee grinding device 100 is a grinder-doser device. Additional known settings of the grinding members can adjust the particle size of the ground coffee.

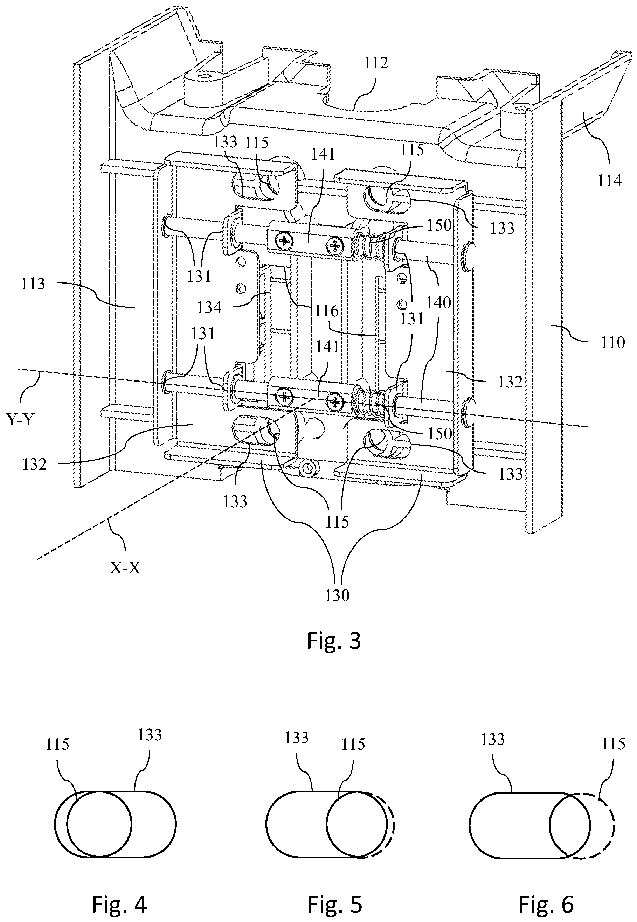

The coffee grinding device 100 comprises a hopper 120 configured to receive coffee beans and direct them to the grinding members. Also, the frame 110 has a passage opening 112 facing outwards from the frame 110 and in communication with the grinding members (the passage opening 112 is only partially visible in Figure 3, where most of the frame 110 has been removed to show certain internal parts).

The passage opening 112 is in a position above the base of the frame 110 and faces downwards. A front space is provided below the passage opening 112, outside the frame 110. The front space is at least partially occupied by the loading device 200, as further described below.

The frame 110 has a wall, referred to as fixing wall 113, which is located below the passage opening 112 and faces the front space. The passage opening 112 is formed in a head portion 114 of the frame 110, which protrudes above the fixing wall 113 and is in a position above the base of the frame 110.

The fixing wall 113 has an upper portion, proximal to the passage opening 112, and a lower portion, distal from the passage opening 112.

The fixing wall 113 is designed for removable fixation of one or more alternative loading devices 200. Each loading device 200 is generally equipped with means for supporting a ground coffee container and/or for directing the ground coffee from the passage opening 112 to a ground coffee container. In particular, when a loading device 200 is fixed to the fixing wall 113, between the upper portion and the lower portion of the fixing wall 113, it at least partially occupies the front space, whereby a ground coffee container, in an appropriate position with respect to the loading device, it receives the ground coffee from the frame 110 through the passage opening 112.

The fixation system between any of the implementations of the loading devices 200 and the coffee grinding device 100 will be now described. Details on how the ground coffee containers are supported and how the ground coffee is directed thereto will be set forth later herein.

Each loading device 200 comprises one or more fixing pins 210, preferably at least two fixing pins 210, more preferably at least two pairs of fixing pins 210, as shown in the figures, in which there are exactly four fixing pins 210.

Correspondingly, the fixing wall 113 has at least one fixing aperture 115, preferably two fixing apertures 115, and more preferably at least two pairs of fixing apertures 115, i.e. one fixing aperture 115 for each fixing pin 210. Features will initially be described for a single pin 210 and a single fixing aperture 115, which shall be intended to be applied to each pin 210 and each respective fixing aperture 115.

The fixing pin 210 can slidingly fit through the fixing aperture 210 along an axial direction X-X, which is substantially perpendicular to the fixing wall 113. Preferably, when the frame 110 is in an upright position, the axial direction X-X is substantially horizontal.

The fixing pin 210 has a locking seat 211, e.g. consisting of a groove on a lateral surface of the pin 210. Preferably, the groove is an annular groove with a profile extending about a major axis of extension of the pin 210, oriented in the axial direction X-X.

In the illustrated embodiments, when the loading device 200 is fixed to the coffee grinding device 100, the locking seat 211 is located inside the frame 110, i.e. emerges inside the frame 110 from the inner face of the fixing wall 113. The inner face of the fixing wall 113 is obviously the one that faces the interior of the frame 110, and is visible in Figure 3, while an opposite outer face of the fixing wall 113 faces the front space.

The coffee grinding device 100 comprises at least one locking element 130, preferably located inside the frame 110. The locking element 130 is movable along the fixing wall 113.

For this purpose, the coffee grinding device 100 comprises at least one guide 140 fixed to the fixing wall 113, arranged inside the frame 110 along the fixing wall 113. In the illustrated embodiment, two parallel guides 140 having similar features are provided, only one of which will be described in greater detail.

The guide 140 extends in a sliding direction Y-Y, substantially parallel to the fixing wall 113, i.e. substantially perpendicular to the axial direction X-X. Preferably, when the frame 110 is in the upright position, the sliding direction Y-Y is substantially horizontal, like the axial direction X-X. However, vertical orientations of the sliding direction Y-Y are not excluded.

The locking element 130 is slidable along the guide 140. Each guide 140 can be formed, for example, as a rod, and each locking element 130 comprises one or more holes or eyelets 131 slidingly fitted on the rod.

The locking element 130 is namely movable along the guide at least between a first position and a second position which are spaced apart in the sliding direction Y-Y. In the first position, the locking element 130 engages the locking seat 211 of at least one corresponding fixing pin 210 that fits in one of the fixing apertures 115. This will stop the sliding movement of the fixing pin 210 in the axial direction X-X through the fixing aperture 115. In the second position, the locking element 130 does not engage the locking seat 115, and therefore the pin 210 is left free to axially slide.

In the preferred embodiment, each locking element 130 comprises a plate 132, substantially parallel to the fixing wall 113 and close to the fixing wall 113. At least one slot 133 is formed in the plate 132 and mainly extends in the sliding direction Y-Y. In both the first and second positions, the opening defined by the slot 133 faces the fixing aperture 115 and is aligned therewith in the axial direction X-X, and in particular the fixing pin 210 extends through its respective fixing aperture 115 and its respective slot 133.

The slot 133 is delimited by an edge, a portion of which penetrates the groove of the fixing pin 210 when the locking element 130 is in the first position. Conversely, in the second position the edge of the slot 133 releases the groove.

In addition to the groove receiving the edge of the slot 133, each fixing pin 210 has a sealing seat 212 which houses a seal (not shown), for example in the form of an additional groove in which an O-ring is seated. When the loading device 200 is attached to the coffee grinding device 100, the seal is placed between the fixing pin 210 and the fixing aperture 115 to damp the vibrations exchanged between the coffee grinding device 100 and the loading device 200.

Preferably, the coffee grinding device 100 comprises elastic members 150 configured to press the locking element 130 away from the second position toward the first position, i.e. to cause the pin 210 to stop. The elastic members 150 can be represented, for example, by a spring fitted on the guide 140, and operable between the locking element 130 and a stop 141 fixed to the guide 140. In the embodiment of the figures, the stop 141 also forms a connection between the guide 140 and the fixing wall 113.

In order to ensure an adequate pressure of the elastic members 150 on the locking element 130, which prevents during use its accidental release from the locking seat 211, the elastic members 150 are preferably configured to press the locking element 130 even beyond the first position (still away from the second position), toward a limit-stop position that can be reached only when the pin 210 is disengaged from the fixing aperture 115. The first position is therefore between the limit-stop position and the second position.

The limit-stop position may correspond to a rest position of the elastic members 150, or a position in which the sliding movement of the locking element 130 along the guide 140 cannot be continued, despite a residual pressure of the elastic members 150, for example, due to the end of the guide 140 or the presence of additional stops, not shown.

It should be noted that in the second position perfect axial alignment exists between the fixing aperture 115 and the slot 133 (Figure 4), allowing the pin 210 to slide through both. In the first position, the axial alignment is almost complete (Figure 5), and thus the pin 210 can extend through both, but the edge of the slot partially axially overlaps the fixing aperture 115 to be able to engage the groove of the pin 210 and prevent axial sliding thereof. In the limit-stop position, the plate 132 at least partially blocks the fixing aperture 115 (Figure 6). Therefore, the axial misalignment between the slot 133 and the fixing aperture 115 prevents the pin from extending through both to a sufficient extent for the locking seat 211 to emerge inside the frame 110.

Nevertheless, in the limit-stop position, the axial intersection of the fixing aperture 115 and of the slot 133 will still preferably define at least a chink, as shown in Figure 6. In one embodiment, the fixing pin 210 has a tip portion 213 whose shape allows it to fit into the chink and cause the movement of the locking element 130 from the limit-stop position toward the second position, thereby acting on the edge of the slot 133, when the pin 210 is axially pressed through the fixing aperture 115 toward the inside of the frame 110.

An example of this conformation is given by a tip portion 213 that is conical or tapered with an angle less than or equal to 45°, as measured with respect to the axial direction X-X.

In the illustrated embodiments, the fixing wall 113 has at least one control window 116, namely one for each locking element 130. In addition, each locking element 130 comprises a control member 134 which emerges outside the frame 110 through the control window 116.

The control member 134 is movable within the control window 116 and is movable to drag the locking member 130 between the first position, the second position and optionally the limit-stop position. The control member 134 can be represented, for example, by a bracket attached to the plate 132, or formed integrally with the plate 132. In different embodiments, the control member 134 can be grasped and dragged both from the first position to the second position, and from the second position to the first position, or it can be caused to be ungraspable by certain parts of the loading device 200, as described below. In the latter case, at least when the loading device 200 is fixed to the coffee grinding device 100, the control member 134 is only allowed to be pushed from the first position toward the second position, and not the reverse.

Therefore, the fixation of the loading device 200 to the coffee grinding device 100 may be obtained, for example, by pushing the control member 134 along the sliding direction Y-Y, to move the locking element 130 from the limit-stop position to the second position, against the action of the elastic members 150, to be able to insert the pin 210 and stop the thrust on the control member 134, so that the elastic members 150 can return the locking element 130 from the second to the first position.

Then, the loading device 200 may be removed by pushing the control member 134 from the first to the second position, to be able to remove the pin 210 and release the control member 134 so that the elastic members 150 can return the locking member 130 from the second position to the limit-stop position.

In less advantageous embodiments, not shown, the movement of the control member 134 between the first and second positions allows the pin 210 to be locked and unlocked, even with no elastic members 150.

In the preferred embodiment, the coffee grinding device 100 comprises two locking elements 130, which are adapted to move toward and away from each other along the sliding direction Y-Y. The two locking elements 130 can be slidable, for example, along the same guide 140, or the same pair of guides 140, which are spaced apart in the figures substantially in the vertical direction.

Each locking element 130 is configured to engage, in the first position, the locking seat 211 of at least one respective fixing pin 210.

Preferably, the second position of both the locking elements 130 corresponds to a minimum distance between the locking elements 130, whereas the first position corresponds to an increased distance between the locking elements 130, with respect to the minimum distance, and the limit-stop position corresponds to a maximum distance between the locking elements 130, which is greater than the increased distance. In other words, the pins 210 can be unlocked by moving the locking elements 130 toward each other along the sliding direction Y-Y and can be unlocked by moving the locking elements 130 away from each other, for example by the action of the elastic members 150.

In the embodiment of the figures, each locking element 130 has a pair of slots 133 to retain a pair of fixing pins 210 in the first position. The two pairs of fixing pins 210, as well as the two locking elements 130, are spaced apart along the sliding direction Y-Y, whereas the two fixing pins 210 that compose each pair, as well as the two slots 133 of each locking element 130, are spaced apart perpendicular to the sliding direction Y-Y and to the axial direction X-X. The fixing apertures 115 have a similar arrangement.

Therefore, it should be noted that fixing apertures 115 and fixing pins 210 are provided both at the upper portion and at the lower portion of the fixing wall 113.

The loading device 200 has the main function of interfacing the passage opening 112 with at least one respective container to collect the ground coffee, so that the ground coffee can be loaded from the passage opening 112 to the container. However, certain support members for certain types of container may also be integrated directly in the coffee grinding device 100, as shown in the figures and as described below.

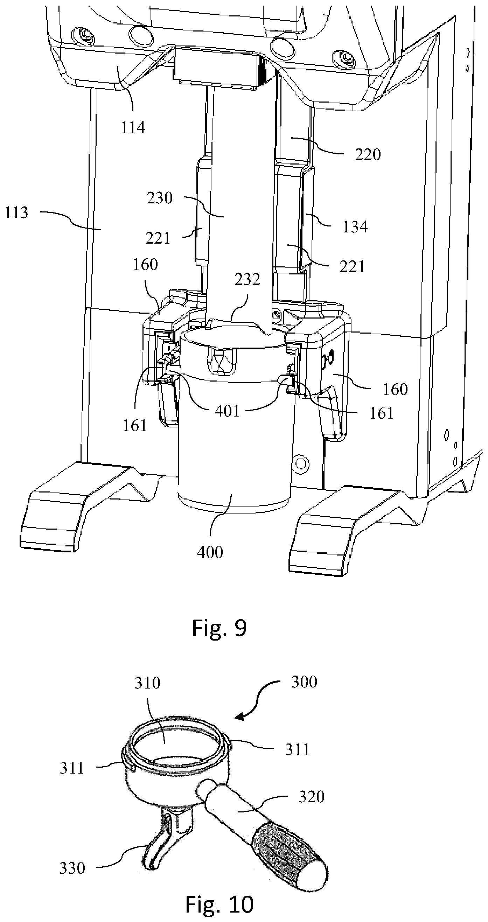

Thus, the coffee grinding device 100 comprises a pair of arms 160 configured to support a portafilter 300, as shown in Figure 10. The arms 160 project from the fixing wall 113, substantially along the axial direction X-X. Moreover, they are spaced horizontally from each other, preferably along the sliding direction Y-Y. In other words, the arms 160 are arranged as a fork.

It should be noted, as is well known in the art, that a portafilter 300 (Figure 10) comprises a cup 310, with side walls and a bottom. Also, the portafilter 300 comprises a handle 320 connected to the cup 310, and usually one or more drain channels 330 which project from the bottom of the cup 310 and are in fluid communication with the cup 310. In most designs, the cup 310 has a plurality of lateral flaps 311, for example two or three flaps 311, which outwardly project from the side walls of the cup 310.

Thus, the arms 160 are spaced apart to retain the cup 310 of the portafilter 300 therebetween. In addition, each arm 160 has, on an inner side facing the opposite arm 160, at least one throat 161 which is shaped to receive a respective flap 311 of the portafilter 300. In the illustrated embodiment, each arm 160 has two vertically spaced throats 161 on its inner side. Each throat 161 mainly extends in the axial direction X-X.

The throats 161 of the arms 160 may be also used to support other types of containers, for example jars 400 (Figure 9), which have the right dimensions to be retained between the arms 160 and lateral flaps 401 designed to fit into the throats 161.

While it is apparent from the above that the coffee grinding device 100 is able to support a portafilter 300 (or a first type of jar 400), the ground coffee is not designed to be directly discharged from the passage opening 112 to a portafilter 300 supported by the pair of arms 160, but the loading device 200 is interposed therebetween.

Thus, the pair of arms 160 is arranged at the lower portion of the fixing wall 113, namely in a position below the fixing apertures 115, well below the passage opening 112. Therefore, the loading device 200 can be fixed to the exterior of the frame of the coffee grinding device 100 between the passage opening 112 and the pair of arms 160.

The loading device 200 comprises a panel 220 from which the fixing pins 210 project. When the loading device 200 is fixed to the coffee grinding device, the panel 220 is arranged along the fixing wall 113, between the head portion 114 of the frame 110 and the pair of arms 160.

In particular, the panel 220 has an upper portion located at the upper portion of the fixing wall 113, and a lower portion located at the lower portion of the fixing wall 113. Some pins 210 may project out of the upper portion of the panel 220, and others out of the lower portion of the panel 220.

The panel 220 is not necessarily flat, but preferably has two opposite hollow projections 221 located at the control windows 116. The projections 221 each define a compartment for the movement of the control members 134 together with the respective locking elements 130 between the first and second positions. The projections 221 cover the control members 134, preventing them from being grasped but each has an opening facing one side of its respective control member 134, allowing it to be pushed from the first position to the second position.

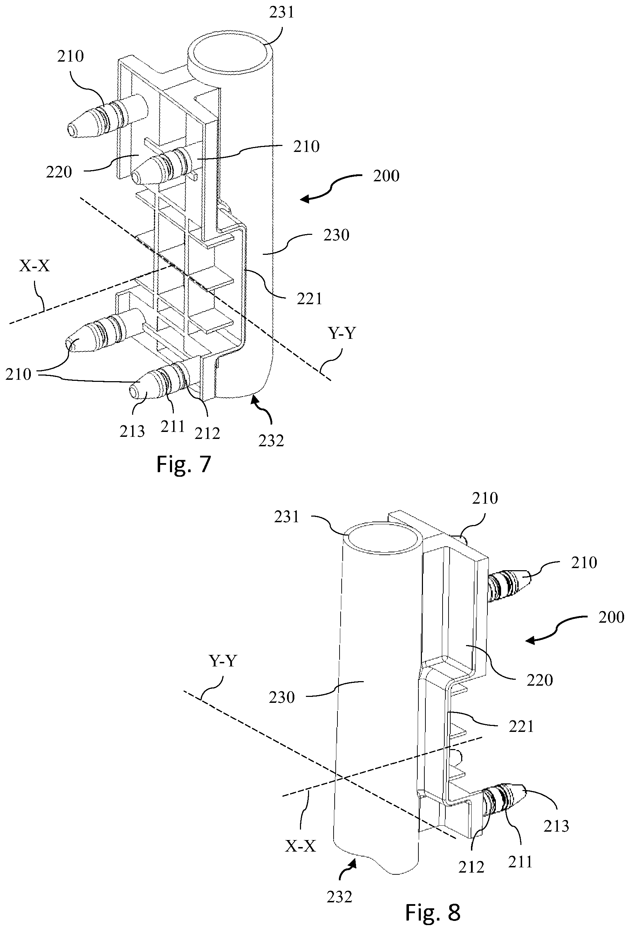

In one embodiment, as shown in Figures 7-9, the loading device 200 allows on-demand dispensing. In particular, the loading device 200 comprises a directing channel 230 attached to the panel 220.

The directing channel 230 has an upper opening 231 and a lower opening 232, which are vertically spaced apart from each other. The upper opening 231 is in communication with the passage opening 112, and therefore with the grinding members, to receive the ground coffee, and is located at the upper portion of the panel 220. On the other hand, the lower opening 232 is located at the lower portion of the panel 220. In particular, the lower opening 232 is close to the arms 160, so that the ground coffee that leaves the lower opening 232 can fall into a portafilter 300 or into a jar 400 held between the arms 160.

In one alternative embodiment, not shown, the lower opening 232 is equipped with a closure member, for example a plate hinged to the directing channel 230, which also acts as a storage channel. The closure member can be actuated between a closed position and open position. In the closed position, the closure member engages the lower opening 232 and closes it. The ground coffee that enters from the upper opening 231 can accumulate in the conveyor channel 230, on the closure member. In the open position, the lower opening 232 is free of the closure member. Therefore, the ground coffee previously accumulated in the directing channel 230 can be discharged to the outside, fall through the lower opening 232 and be poured into the container positioned between the pair of arms 160.

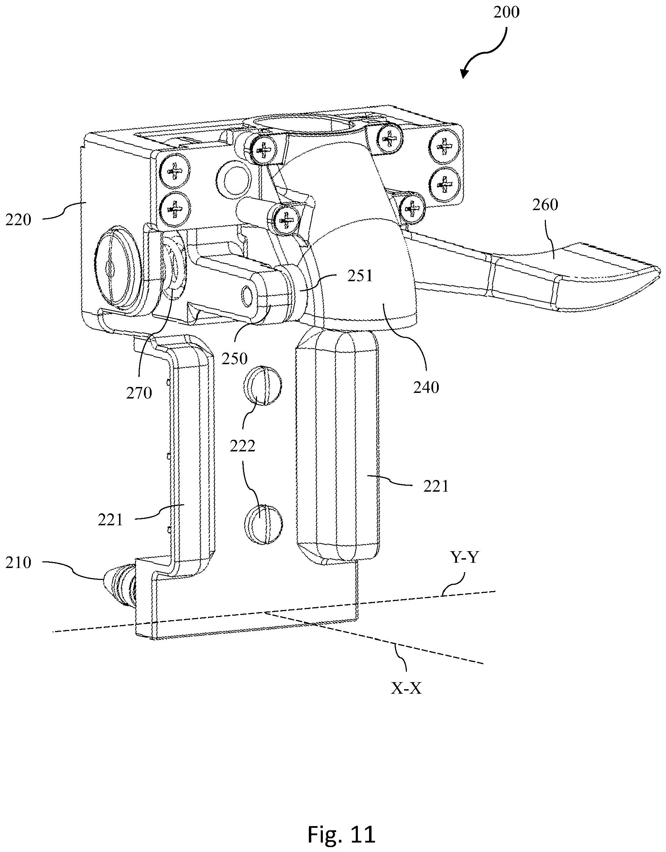

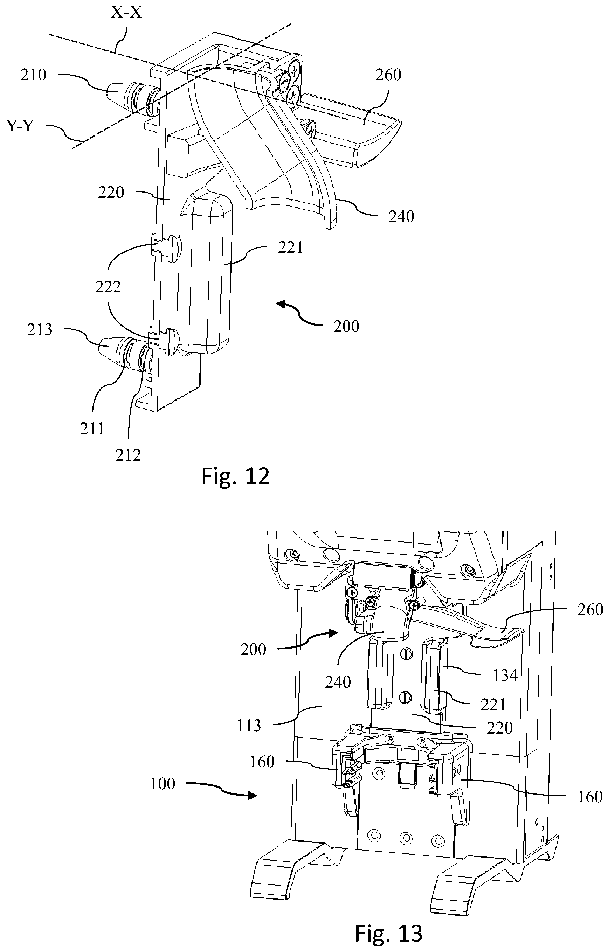

Another embodiment of the loading device 200 is shown in Figures 11-19 and is configured to allow traditional dispensing of ground coffee.

The loading device 200 comprises a discharge spout 240, directly or indirectly fixed to the panel 220 at the upper portion of the panel 220. The discharge spout 240 is located at the passage opening 112 and is in communication with it and therefore with the grinding members. The discharge spout 240 defines a channel that is formed to guide the ground coffee out of the passage opening 112 downwards, and preferably away from the fixing wall 113.

Preferably, the loading device 200 also comprises a holding member 250, movably connected to the discharge spout 240. In particular, the holding member 250 is able to move between a retaining position and a free position. In the free position, the holding member 250 is spaced apart from the discharge spout 240. On the other hand, in the holding position, the holding member 250 is pressed against the discharge spout 240, namely against an outer surface of the discharge spout 240. Preferably, the holding member 250 comprises a disc 251, for example made of rubber, which contacts the discharge spout 240 in the holding position.

It should be noted that a bag for containing ground coffee can be constrained to the discharge spout 240 by simply interposing an edge portion of the bag between the holding member 250 and the outer surface of the discharge spout 240, and then move the holding member 250 to the holding position.

The loading device 200 further comprises an actuator 260, for example a lever, operable to move the holding member 250 from the holding position to the free position, and vice versa. Preferably, additional elastic members 270 are configured to press the holding member 250 from the free position to the holding position.

It should be noted that a mechanical transmission, not shown, can be interposed between the actuator 260 and the holding member 250 to transfer the movement of the actuator 260 to the holding member 250 without necessarily requiring them to perform the same type of motion, for example a rotary and a translational motion, or two rotary motions about different axes, or two translational motions in different directions.

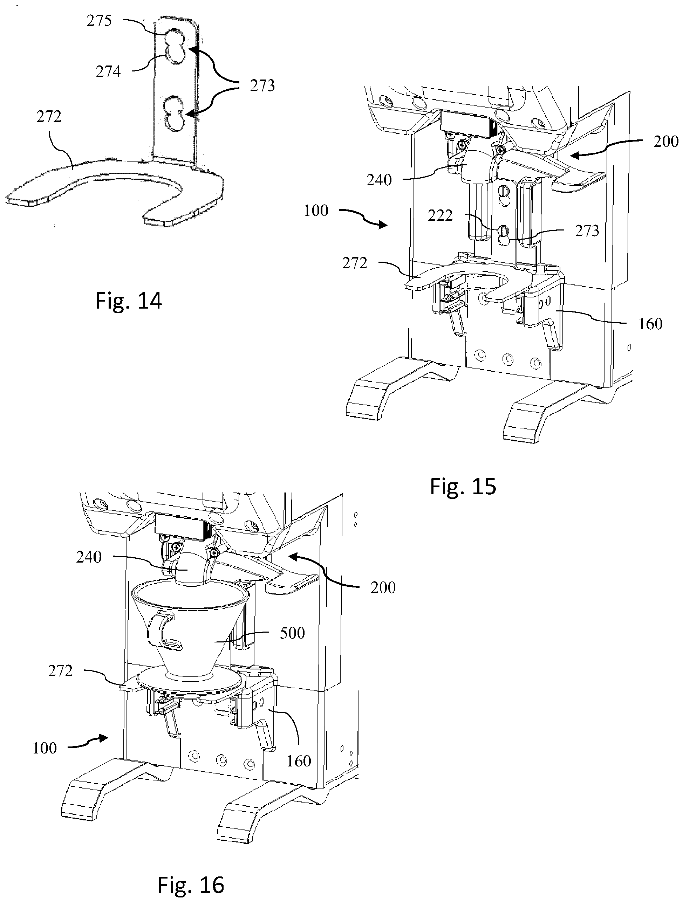

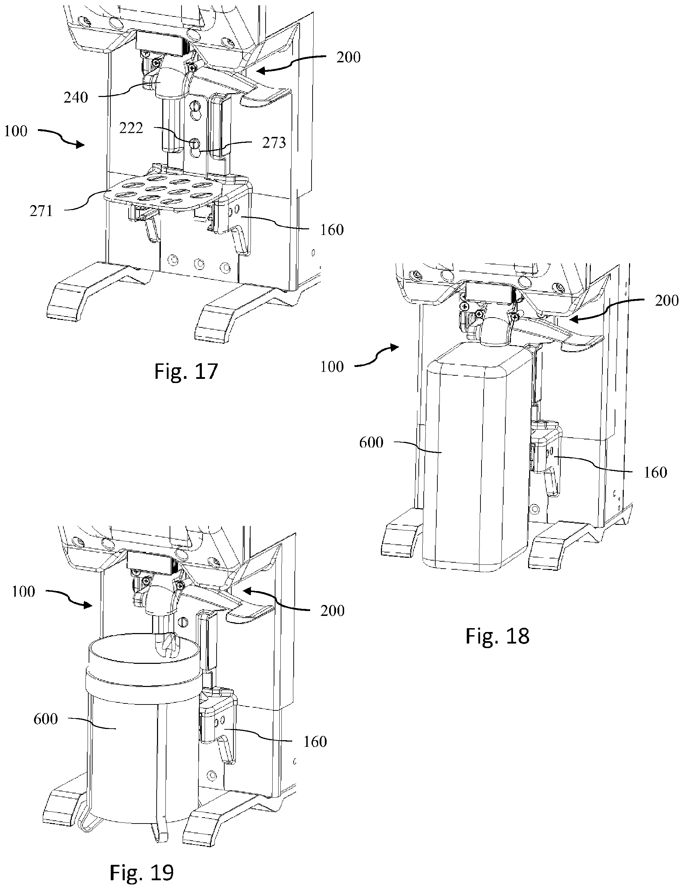

In the embodiment of Figures 11-19, the loading device 200 may have a support plate 271 for ajar (not shown, generally differing from the jar 400), as shown in Figure 17, or a support fork 272 for a dripper 500, as shown in Figures 14-16.

Preferably, the support plate 271 and/or the support fork 272 can be removably fixed to the panel 220, with common fixing means, to be interchangeable and to allow, if necessary, the use of the coffee grinding assembly without them.

One example of fixing means is given by a flange formed in the support plate 271 or in the support fork 272 and having a hole 273, and by a screw 222 projecting out of the panel 220. The screw 222 has a stem and a head, and the hole 273 has an enlarged portion 274, though which the head of the screw 222 can pass, and a narrow portion 275, through which the head of the screw 222 cannot pass. Stable positioning is thus obtained when the stem of the screw 222 extends through the narrow portion 275. The figures show two screws 222 and two holes 273.

The support plate 271 and/or the support fork 272 are vertically spaced apart from the discharge spout 240 and from the passage opening 112, to allow a container to be positioned between the plate 271 or the fork 272 and the discharge spout 240. Thus, they are arranged at the lower portion of the panel 220, and optionally they rest on the pair of arms 160.

It should be noted that, according to a variant of what is shown in the figures, a loading device 200 having a support plate 271 and/or a support fork 272 may not have any discharge spout 240.

On the other hand, jars, cans or other containers 600 of particular size, for example greater than the distance between the discharge spout 240 and the pair of arms 160, may rest directly on the same level surface upon which the coffee grinding device 100 also rests; in front or in the middle of the pair of arms 160, as shown in Figures 18-19. Here, the support plate 271 and/or the support fork 272 may be an obstacle for the container 600, in which case they may be omitted or removed.

The various possible positions of ground coffee containers include a position hung from the arms 160, such as in the case of the portafilter 300 or a first type of jar 400 (Figure 9), at the lower portion of the fixing wall 113; a second position resting on a plate 271 or a fork 272, for containers such as a dripper 500 (Figure 16) or a second type of jar, between the lower portion and the upper portion of the fixing wall 113; and a third position resting on the same level surface on which the frame 110 also rests (Figures 18 and 19).

A skilled person may obviously envisage a number of equivalent changes to the above discussed variants, without departure from the scope defined by the appended claims.

## Claims

1. A coffee grinding assembly comprising a coffee grinding device (100) and a loading device (200), wherein
- the coffee grinding device (100) comprises a frame (110) having a passage opening (112),
- the coffee grinding device (100) comprises grinding members inside the frame (110), which are configured to grind coffee beans and are arranged so that the ground coffee passes through the passage opening (112), and
- the loading device (200) is removably fixed outside of the frame (110) of the coffee grinding device (100), the loading device (200) being configured to interface the passage opening (112) with at least one respective container (300, 400, 500, 600), so that the ground coffee can be loaded from the passage opening (112) to the container (300, 400, 500, 600),
**characterized in that:**
- the frame (110) has a fixing wall (113) having a fixing aperture (115),
- the loading device (200) comprises a fixing pin (210) which is slidably inserted through the fixing aperture (115), the fixing pin (210) having a locking seat (211),
- the coffee grinding device (100) comprises a locking element (130) which is movable along the fixing wall (113) between a first position, in which the locking element (130) engages the locking seat (211) to stop the sliding movement of the fixing pin (210) through the fixing aperture (115), and a second position, in which the locking element (130) does not engage the locking seat (211).

2. A coffee grinding assembly as claimed in claim 1, wherein the coffee grinding device (100) comprises elastic members (150) configured to press the locking element (130) from the second position toward the first position.

3. A coffee grinding assembly as claimed in claim 1 or 2, wherein:
- the locking seat (211) is a groove formed in a side surface of the fixing pin (210), and
- the locking element (130) comprises a plate (132) having a slot (133) formed therein, which is delimited by an edge,
- the fixing pin (210) extends through the slot (133), and, in the first position, the edge of the slot (133) penetrates in the groove of the fixing pin (210).

4. A coffee grinding assembly as claimed in claims 2 and 3, wherein:
- in the first and second positions, the slot (133) is aligned with the fixing aperture (115),
- when the pin (210) is disengaged from the fixing aperture (115), the elastic members (150) are configured to press the locking element (130) away from the second position to a limit-stop position beyond the first position, and
- in the limit-stop position, the plate (132) at least partially blocks the fixing aperture (115).

5. A coffee grinding assembly as claimed in claim 4, wherein:
- in the limit-stop position, the axial intersection of the fixing aperture (115) and of the slot (133) defines a chink,
- the fixing pin (210) has a tip portion (213), which is conical or tapered with an angle of less than or equal to 45°, as measured with respect to an axial direction (X-X) along which the fixing pin (210) is slidable, so that the tip portion (213) can be inserted into the chink to cause the locking element (130) to move from the limit-stop position toward the second position, by acting on the edge of the slot (133) when the pin (210) is axially pressed through the fixing aperture (115) toward the inside of the frame (110).

6. A coffee grinding assembly as claimed in any of claims 1 to 5, wherein:
- the fixing wall (113) has a control window (116), and
- the locking element (130) comprises a control member (134) which projects out of the frame (110) through the control window (116), the control member (134) being movable to draw the locking element (130) between the first and second positions.

7. A coffee grinding assembly as claimed in any of claims 1 to 6, wherein:
- the coffee grinding device (100) comprises two locking elements (130), which are movable toward and away from each other,
- the loading device (200) comprises a plurality of fixing pins (210), preferably two pairs of fixing pins (210), each locking element (130) being configured to engage the locking seat (211) of at least one respective fixing pin (210), preferably of a respective pair of fixing pins (210).

8. A coffee grinding assembly as claimed in any of claims 1 to 7, wherein the coffee grinding device (100) comprises a guide (140) fixed to the fixing wall (113), preferably inside the frame (110), the locking element (130) being slidable along the guide (140) between the first and second positions.

9. A coffee grinding assembly as claimed in any of claims 1 to 8, wherein the loading device (200) comprises a discharge spout (240) located at the passage opening (112).

10. A coffee grinding assembly as claimed in claim 9, wherein the loading device (200) comprises a holding element (250), which is movably connected to the discharge spout (240), and an actuator (260), which is operable to move the holding element (250) between a holding position, in which the holding member (250) is pressed against the discharge spout (240) to attach a bag to the discharge spout (240), and a free position, in which the holding member (250) is spaced apart from the discharge spout (240) to release the bag from the discharge spout (240).

11. A coffee grinding assembly as claimed in any of claims 1 to 10, wherein the loading device (200) comprises a support tray (271) for ajar or a support fork (272) for a dripper (500), which are preferably spaced apart from the discharge spout (240) to allow a jar or a dripper (500) to be positioned between the tray (271) or the fork (272) and the discharge spout (240).

12. A coffee grinding assembly as claimed in any of claims 1 to 8, wherein the loading device (200) comprises a directing channel (230) having an upper opening (231) in communication with the passage opening (112) for receiving the ground coffee, and a lower opening (232) spaced apart from the passage opening (112).

13. A coffee grinding assembly as claimed in any of claims 1 to 12, wherein the coffee grinding device (100) comprises a pair of support arms (160) for a portafilter (300), the pair of arms (160) projecting out of the fixing wall (113) and being arranged in a lower position with respect to the fixing aperture (115), below the passage opening (112), wherein each arm (160) preferably has, on an inner side facing the opposite arm (160), at least one throat (161), which is shaped to receive a flap (311) of a portafilter (300) positioned between the two arms (160).

## Patentansprüche

1. Kaffeemahlanordnung, die eine Kaffeemahlvorrichtung (100) und eine Ladevorrichtung (200) umfasst, wobei
- die Kaffeemahlvorrichtung (100) einen Rahmen (110), der eine Durchlassöffnung (112) aufweist, umfasst,
- die Kaffeemahlvorrichtung (100) Mahlelemente innerhalb des Rahmens (110) umfasst, die dazu konfiguriert sind, Kaffeebohnen zu mahlen, und die derart angeordnet sind, dass der gemahlene Kaffee durch die Durchlassöffnung (112) durchgeht, und
- die Ladevorrichtung (200) abnehmbar außerhalb des Rahmens (110) der Kaffeemahlvorrichtung (100) befestigt ist, wobei die Ladevorrichtung (200) dazu konfiguriert ist, eine Schnittstelle zwischen der Durchlassöffnung (112) mit mindestens einem jeweiligen Behälter (300, 400, 500, 600) derart herzustellen, dass der gemahlene Kaffee von der Durchlassöffnung (112) in den Behälter (300, 400, 500, 600) geladen werden kann,
**dadurch gekennzeichnet, dass:**
- der Rahmen (110) eine Befestigungswand (113) aufweist, die eine Befestigungsöffnung (115) aufweist,
- die Ladevorrichtung (200) einen Befestigungsstift (210) umfasst, der verschiebbar durch die Befestigungsöffnung (115) eingefügt ist, wobei der Befestigungsstift (210) einen Verriegelungssitz (211) aufweist,
- die Kaffeemahlvorrichtung (100) ein Verriegelungselement (130) umfasst, das entlang der Befestigungswand (113) zwischen einer ersten Position, in der das Verriegelungselement (130) in den Verriegelungssitz (211) eingreift, um die Verschiebungsbewegung des Befestigungsstifts (210) durch die Befestigungsöffnung (115) zu stoppen, und einer zweiten Position, in der das Verriegelungselement (130) nicht in den Verriegelungssitz (211) eingreift, bewegbar ist.

2. Kaffeemahlanordnung nach Anspruch 1, wobei die Kaffeemahlvorrichtung (100) elastische Elemente (150) umfasst, die dazu konfiguriert sind, das Verriegelungselement (130) aus der zweiten Position in Richtung der ersten Position zu drücken.

3. Kaffeemahlanordnung nach Anspruch 1 oder 2, wobei:
- der Verriegelungssitz (211) eine Nut ist, die in einer Seitenoberfläche des Befestigungsstifts (210) ausgebildet ist, und
- das Verriegelungselement (130) eine Platte (132) umfasst, die darin einen Schlitz (133), der von einer Kante begrenzt ist, ausgebildet aufweist,
- sich der Befestigungsstift (210) durch den Schlitz (133) erstreckt und der Rand des Schlitzes (133) in der ersten Position in die Nut des Befestigungsstifts (210) eindringt.

4. Kaffeemahlanordnung nach den Ansprüchen 2 und 3, wobei:
- in der ersten und der zweiten Position der Schlitz (133) mit der Befestigungsöffnung (115) ausgerichtet ist,
- wenn der Stift (210) aus der Befestigungsöffnung (115) ausgerückt ist, die elastischen Elemente (150) dazu konfiguriert sind, das Verriegelungselement (130) von der zweiten Position weg zu einer Grenzanschlagsposition über die erste Position hinaus zu drücken, und
- in der Grenzanschlagposition die Platte (132) die Befestigungsöffnung (115) mindestens teilweise blockiert.

5. Kaffeemahlanordnung nach Anspruch 4, wobei:
- in der Grenzanschlagposition der axiale Schnittpunkt der Befestigungsöffnung (115) und des Schlitzes (133) eine Ritze definiert,
- der Befestigungsstift (210) einen Spitzenabschnitt (213) aufweist, der konisch oder mit einem Winkel von weniger als oder gleich 45° gemessen in Bezug auf eine axiale Richtung (X-X), entlang der der Befestigungsstift (210) verschiebbar ist, derart verjüngt ist, dass der Spitzenabschnitt (213) in die Ritze eingefügt werden kann, um das Verriegelungselement (130) zu veranlassen, sich von der Grenzanschlagsposition in Richtung der zweiten Position zu bewegen, indem es auf den Rand des Schlitzes (133) einwirkt, wenn der Stift (210) axial durch die Befestigungsöffnung (115) in Richtung des Inneren des Rahmens (110) gedrückt wird.

6. Kaffeemahlanordnung nach einem der Ansprüche 1 bis 5, wobei:
- die Befestigungswand (113) ein Bedienfenster (116) aufweist, und
- das Verriegelungselement (130) ein Steuerelement (134) umfasst, das durch das Steuerfenster (116) aus dem Rahmen (110) herausragt, wobei das Steuerelement (134) bewegbar ist, um das Verriegelungselement (130) zwischen der ersten und der zweiten Position zu ziehen.

7. Kaffeemahlanordnung nach einem der Ansprüche 1 bis 6, wobei:
- die Kaffeemahlvorrichtung (100) zwei Verriegelungselemente (130) umfasst, die zueinander und voneinander weg bewegbar sind,
- die Ladevorrichtung (200) eine Vielzahl von Befestigungsstiften (210), bevorzugt zwei Paare von Befestigungsstiften (210), umfasst, wobei jedes Verriegelungselement (130) dazu konfiguriert ist, in den Verriegelungssitz (211) mindestens eines jeweiligen Befestigungsstifts (210), bevorzugt eines jeweiligen Paars von Befestigungsstiften (210), einzugreifen.

8. Kaffeemahlanordnung nach einem der Ansprüche 1 bis 7, wobei die Kaffeemahlvorrichtung (100) eine Führung (140) umfasst, die an der Befestigungswand (113), bevorzugt innerhalb des Rahmens (110), befestigt ist, wobei das Verriegelungselement (130) entlang der Führung (140) zwischen der ersten und der zweiten Position verschiebbar ist.

9. Kaffeemahlanordnung nach einem der Ansprüche 1 bis 8, wobei die Ladevorrichtung (200) eine Ausgabetülle (240) aufweist, die sich an der Durchlassöffnung (112) findet.

10. Kaffeemahlanordnung nach Anspruch 9, wobei die Ladevorrichtung (200) ein Halteelement (250), das bewegbar mit der Ausgabetülle (240) verbunden ist, und einen Aktuator (260) umfasst, der betätigbar ist, um das Halteelement (250) zwischen einer Halteposition, in der das Halteelement (250) gegen die Ausgabetülle (240) gedrückt wird, um einen Beutel an der Ausgabetülle (240) zu befestigen, und einer freien Position, in der das Halteelement (250) von der Ausgabetülle (240) beabstandet ist, um den Beutel von der Ausgabetülle (240) zu lösen, zu bewegen.

11. Kaffeemahlanordnung nach einem der Ansprüche 1 bis 10, wobei die Ladevorrichtung (200) eine Tragschale (271) für ein Gefäß oder eine Traggabel (272) für einen Tropfer (500) umfasst, die bevorzugt von der Ausgabetülle (240) beabstandet sind, um zu erlauben, dass ein Gefäß oder ein Tropfer (500) zwischen der Schale (271) oder der Gabel (272) und der Ausgabetülle (240) positioniert wird.

12. Kaffeemahlanordnung nach einem der Ansprüche 1 bis 8, wobei die Ladevorrichtung (200) einen Lenkkanal (230) umfasst, der eine obere Öffnung (231) in Verbindung mit der Durchlassöffnung (112) aufweist, um den gemahlenen Kaffee zu empfangen, und eine untere Öffnung (232), die von der Durchlassöffnung (112) beabstandet ist.

13. Kaffeemahlanordnung nach einem der Ansprüche 1 bis 12, wobei die Kaffeemahlvorrichtung (100) ein Paar von Tragarmen (160) für einen Siebträger (300) umfasst, wobei das Paar von Armen (160) aus der Befestigungswand (113) herausragt und in einer unteren Position in Bezug auf die Befestigungsöffnung (115) unterhalb der Durchlassöffnung (112) eingerichtet ist, wobei jeder Arm (160) bevorzugt an einer Innenseite, die dem entgegengesetzten Arm (160) zugewandt ist, mindestens eine Kehle (161) aufweist, die dazu gestaltet ist, eine Klappe (311) eines Siebträgers (300), der zwischen den zwei Armen (160) positioniert ist, aufzunehmen.

## Revendications

1. Assemblage de mouture de café comprenant un dispositif de mouture de café (100) et un dispositif de chargement (200), dans lequel
- le dispositif de mouture de café (100) comprend un cadre (110) ayant une ouverture de passage (112),
- le dispositif de mouture de café (100) comprend des éléments de mouture à l'intérieur du cadre (110), qui sont configurés pour moudre des grains de café et sont agencés de sorte que le café moulu passe à travers l'ouverture de passage (112), et
- le dispositif de chargement (200) est fixé de manière amovible à l'extérieur du cadre (110) du dispositif de mouture de café (100), le dispositif de chargement (200) étant configuré pour interfacer l'ouverture de passage (112) avec au moins un récipient respectif (300, 400, 500, 600), de sorte que le café moulu puisse être chargé de l'ouverture de passage (112) au récipient (300, 400, 500, 600),
**caractérisé en ce que** :
- le cadre (110) a une paroi de fixation (113) ayant une ouverture de fixation (115),
- le dispositif de chargement (200) comprend une broche de fixation (210) qui est insérée de manière coulissante à travers l'ouverture de fixation (115), la broche de fixation (210) ayant un siège de verrouillage (211),
- le dispositif de mouture de café (100) comprend un élément de verrouillage (130) qui est mobile le long de la paroi de fixation (113) entre une première position, dans laquelle l'élément de verrouillage (130) vient en prise avec le siège de verrouillage (211) pour arrêter le mouvement de coulissement de la broche de fixation (210) à travers l'ouverture de fixation (115), et une seconde position, dans laquelle l'élément de verrouillage (130) ne vient pas en prise avec le siège de verrouillage (211).

2. Assemblage de mouture de café selon la revendication 1, dans lequel le dispositif de mouture de café (100) comprend des éléments élastiques (150) configurés pour presser l'élément de verrouillage (130) de la seconde position vers la première position.

3. Assemblage de mouture de café selon la revendication 1 ou 2, dans lequel :
- le siège de verrouillage (211) est une rainure formée dans une surface latérale de la broche de fixation (210), et
- l'élément de verrouillage (130) comprend une plaque (132) ayant une fente (133) formée dans celle-ci, qui est délimitée par un bord,
- la broche de fixation (210) s'étend à travers la fente (133), et, dans la première position, le bord de la fente (133) pénètre dans la rainure de la broche de fixation (210).

4. Assemblage de mouture de café selon les revendications 2 et 3, dans lequel :
- dans les première et seconde positions, la fente (133) est alignée avec l'ouverture de fixation (115),
- lorsque la broche (210) est dégagée de l'ouverture de fixation (115), les éléments élastiques (150) sont configurés pour presser l'élément de verrouillage (130) loin de la seconde position à une position de butée de limite au-delà de la première position, et
- dans la position de butée de limite, la plaque (132) bloque au moins partiellement l'ouverture de fixation (115).

5. Assemblage de mouture de café selon la revendication 4, dans lequel :
- dans la position de butée de limite, l'intersection axiale de l'ouverture de fixation (115) et de la fente (133) définit une fissure,
- la broche de fixation (210) a une partie de pointe (213), qui est conique ou effilée avec un angle inférieur ou égal à 45°, tel que mesuré par rapport à une direction axiale (X-X) le long de laquelle la broche de fixation (210) peut coulisser, de sorte que la partie de pointe (213) puisse être insérée dans la fissure pour amener l'élément de verrouillage (130) à se déplacer de la position de butée de limite vers la seconde position, en agissant sur le bord de la fente (133) lorsque la broche (210) est pressée axialement à travers l'ouverture de fixation (115) vers l'intérieur du cadre (110).

6. Assemblage de mouture de café selon l'une quelconque des revendications 1 à 5, dans lequel :
- la paroi de fixation (113) a une fenêtre de commande (116), et
- l'élément de verrouillage (130) comprend un élément de commande (134) qui fait saillie hors du cadre (110) à travers la fenêtre de commande (116), l'élément de commande (134) étant mobile pour tirer l'élément de verrouillage (130) entre les première et seconde positions.

7. Assemblage de mouture de café selon l'une quelconque des revendications 1 à 6, dans lequel :
- le dispositif de mouture de café (100) comprend deux éléments de verrouillage (130), qui peuvent se rapprocher et s'éloigner l'un de l'autre,
- le dispositif de chargement (200) comprend une pluralité de broches de fixation (210), de préférence deux paires de broches de fixation (210), chaque élément de verrouillage (130) étant configuré pour venir en prise avec le siège de verrouillage (211) d'au moins une broche de fixation respective (210), de préférence d'une paire respective de broches de fixation (210).

8. Assemblage de mouture de café selon l'une quelconque des revendications 1 à 7, dans lequel le dispositif de mouture de café (100) comprend un guide (140) fixé à la paroi de fixation (113), de préférence à l'intérieur du cadre (110), l'élément de verrouillage (130) pouvant coulisser le long du guide (140) entre les première et seconde positions.

9. Assemblage de mouture de café selon l'une quelconque des revendications 1 à 8, dans lequel le dispositif de chargement (200) comprend une buse de décharge (240) située au niveau de l'ouverture de passage (112).

10. Assemblage de mouture de café selon la revendication 9, dans lequel le dispositif de chargement (200) comprend un élément de retenue (250), qui est relié de manière mobile à la buse de décharge (240), et un actionneur (260), qui peut être actionné pour déplacer l'élément de retenue (250) entre une position de retenue, dans laquelle l'élément de retenue (250) est pressé contre la buse de décharge (240) pour fixer un sac à la buse de décharge (240), et une position libre, dans laquelle l'élément de retenue (250) est espacé de la buse de décharge (240) pour libérer le sac de la buse de décharge (240).

11. Assemblage de mouture de café selon l'une quelconque des revendications 1 à 10, dans lequel le dispositif de chargement (200) comprend un plateau de support (271) pour un pot ou une fourche de support (272) pour un goutteur (500), qui sont de préférence espacés de la buse de décharge (240) pour permettre à un pot ou un goutteur (500) d'être positionné entre le plateau (271) ou la fourche (272) et la buse de décharge (240).

12. Assemblage de mouture de café selon l'une quelconque des revendications 1 à 8, dans lequel le dispositif de chargement (200) comprend un canal de direction (230) ayant une ouverture supérieure (231) en communication avec l'ouverture de passage (112) pour recevoir le café moulu, et une ouverture inférieure (232) espacée de l'ouverture de passage (112).

13. Assemblage de mouture de café selon l'une quelconque des revendications 1 à 12, dans lequel le dispositif de mouture de café (100) comprend une paire de bras de support (160) pour un porte-filtre (300), la paire de bras (160) faisant saillie hors de la paroi de fixation (113) et étant agencés dans une position inférieure par rapport à l'ouverture de fixation (115), en dessous de l'ouverture de passage (112), dans lequel chaque bras (160) a de préférence, sur un côté intérieur faisant face au bras opposé (160), au moins une gorge (161), qui est conformée pour recevoir un appendice (311) d'un porte-filtre (300) positionné entre les deux bras (160).
